(19) Europäisches Patentamt / European Patent Office / Office européen des brevets

(11) **EP 3 901 291 B1**

(12) **EUROPÄISCHE PATENTSCHRIFT**

(45) Veröffentlichungstag und Bekanntmachung des Hinweises auf die Patenterteilung:
**02.03.2022   Patentblatt 2022/09**

(21) Anmeldenummer: **20020198.6**

(22) Anmeldetag: **24.04.2020**

(51) Internationale Patentklassifikation (IPC):
*C21D 6/00* (2006.01)    *C22C 38/00* (2006.01)
*C22C 38/02* (2006.01)    *C22C 38/04* (2006.01)
*F16C 19/00* (2006.01)    *F16C 33/64* (2006.01)
*F16C 33/66* (2006.01)    *C21D 9/40* (2006.01)
*F16C 33/62* (2006.01)    C22C 38/08 (2006.01)
C22C 38/12 (2006.01)    C22C 38/14 (2006.01)
C22C 38/18 (2006.01)    C22C 38/24 (2006.01)
C22C 38/38 (2006.01)    C22C 38/22 (2006.01)

(52) Gemeinsame Patentklassifikation (CPC):
**C21D 6/005; C21D 6/008; C21D 9/40; C22C 38/00;**
**C22C 38/02; C22C 38/04; F16C 19/00;**
**F16C 33/62; F16C 33/64; F16C 33/6692;**
C22C 38/08; C22C 38/12; C22C 38/14;
C22C 38/18; C22C 38/22;        (Forts.)

(54) **MASCHINENELEMENT MIT EINER WÄLZKONTAKTFLÄCHE UND VERFAHREN ZUR WÄRMEBEHANDLUNG EINES MASCHINENELEMENTES**

MACHINE ELEMENT WITH A ROLLING CONTACT SURFACE AND METHOD FOR HEAT TREATMENT OF A MACHINE ELEMENT

ÉLÉMENT DE MACHINE DOTÉ D'UNE SURFACE DE CONTACT ROULANT ET PROCÉDÉ DE TRAITEMENT THERMIQUE D'UN ÉLÉMENT DE MACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.10.2021   Patentblatt 2021/43**

(73) Patentinhaber:
• **Schaeffler Technologies AG & Co. KG**
  **91074 Herzogenaurach (DE)**
• **Deutsche Edelstahlwerke**
  **Specialty Steel GmbH & Co. KG**
  **58452 Witten (DE)**

(72) Erfinder:
• **Blaß, Toni**
  **D-97493 Bergrheinfeld (DE)**
• **Franke, Jörg**
  **D-91093 Hessdorf (DE)**
• **Trojahn, Werner**
  **D-97464 Niederwerrn (DE)**
• **Strohm, Dennis**
  **D-58455 Witten (DE)**
• **Herrera, Clara**
  **D-40477 Düsseldorf (DE)**
• **Krull, Hans-Günter**
  **D-47506 Neukirchen-Vluyn (DE)**

(74) Vertreter: **Meyer, Rudolf**
  **Meyer & Dörring GbR**
  **Patentanwälte**
  **Nürnberger Straße 49**
  **91052 Erlangen (DE)**

(56) Entgegenhaltungen:
**DE-A1- 19 629 398        JP-A- 2012 162 799**
**JP-A- 2016 173 182        US-A- 5 108 491**
**US-A1- 2020 080 594**

(52) Gemeinsame Patentklassifikation (CPC): (Forts.)
C22C 38/24; C22C 38/38; F16C 2204/62;
F16C 2204/64; F16C 2204/70; F16C 2223/14

**Beschreibung**

Die Erfindung betrifft ein Maschinenelement aus Stahl, welches eine Wälzkontaktfläche aufweist. Ferner betrifft die Erfindung ein Verfahren zur Wärmebehandlung eines Maschinenelementes.

Die US 2020/0080594 A1 beschreibt ein als Rillenkugellager ausgebildetes Wälzlager, welches eine aus Stahl gefertigte Komponente mit folgender Zusammensetzung (in Gew.-%) umfasst:
C: 0,15 - 0,70 %; Si: 0,05 - 1,00 %; Mn 0,05 - 1,00 %; P < 0,03 %; S: < 0,03 %; Cu: 0,001 - 0,500; Ni: 0,05 - 0,50; Cr: 11,0 - 18,0 %; Mo: 0,05 - 2,00 %; V: 0,01 - 0,50 %; N: 0,05 - 0,40 %

Die Summe des Gehalts an Kohlenstoff und Stickstoff liegt hierbei im Bereich von 0,4 bis 0,7 Gew.-%, wobei das C/N-Verhältnis mindestens 0,75 beträgt. Die Herstellung des in der US 2020/0080594 A1 beschriebenen Lagerbauteils schließt das Erhitzen bis zu einer Abschreckungstemperatur im Bereich von 1.020 °C bis 1.150 °C und ein anschließendes schnelles Kühlen ein. Für eine Tiefkühlung des Werkstücks kann beispielsweise gasförmiges Kohlendioxid bei einer Temperatur von -130 °C oder flüssiger Stickstoff bei einer Temperatur von -196 °C verwendet werden. In einem Vergütungsverfahren wird das Werkstück auf eine Temperatur von 150 °C bis 450 °C erhitzt. Insbesondere soll eine geeignete Anlasstemperatur im Bereich von 130 °C bis 192 °C liegen.

Aus der WO 2019/024958 A1 ist ein Verfahren zur Herstellung einer Wälzlagerkomponente aus Stahl bekannt. Hierbei wird ein bearbeiteter Rohling aus der Schmiedehitze derart abgekühlt, dass er ein Gefüge mit einem Bainitanteil von wenigstens 80 % aufweist, wonach der Rohling bei einer Temperatur von mindestens 500 °C nitriert wird, bis eine Nitriertiefe von wenigstens 0,2 mm erreicht ist. Als Beispiel für einen Bainitischen Stahl, welcher für dieses Verfahren geeignet ist, ist 16CrMnV7-7 genannt. Weiter ist in der WO 2019/024958 A1 "Cronidur 30" als bekannter Werkstoff aufgeführt. Was den Werkstoff "Cronidur 30" (X30CrMoN15-1, Werkstoffnummer 1.4108) betrifft, wird ergänzend auf die Dokumente EP 0 926 368 B1 und DE 10 2014 208 138 A1 hingewiesen.

Aus der WO 98/41663 A1 ist ein umgeschmolzener, warmfester Stahl bekannt, der einen Legierungsgehalt von mindestens 0,15 % bis 0,50 % Kohlenstoff, 0,15 % bis 0,50 % Stickstoff, 13,0 % bis 17,0 % Chrom und mindestens 0,5 % Molybdän aufweist, wobei der Summengehalt von Kohlenstoff und Stickstoff zwischen 0,60 % und 0,80 % liegt.

Die DE 196 29 398 A1 beschreibt ein Wälzlager, welches insbesondere für die Verwendung in der Luft- und Raumfahrt konzipiert ist. Mindestens ein Lagerring dieses Wälzlagers ist aus einem druckumgeschmolzenen rostfreien Stahl mit einem Legierungsgehalt von mindestens einem Kohlenstoffgehalt von 0,15 % bis 0,50 %, einem Stickstoffgehalt von 0,2 % bis 0,5 %, einem Chromgehalt von 13 % bis 17 % und einem Molybdängehalt von mindestens 0,5 % gefertigt.

Die DE 10 2013 206 141 A1 offenbart ein mediengeschmiertes Wälzlager. Unter einer Medienschmierung wird eine Schmierung mit einem Medium verstanden, welches im bestimmungsgemäßen Betrieb des Wälzlagers in einem dieses umgebenden Raum vorhanden ist und hierbei Teile des Wälzlagers sowie einer gegebenenfalls mit diesem verbundenen Umgebungskonstruktion beaufschlagt, wobei das Medium nicht primär zur Schmierung des Wälzlagers vorgesehen ist.

Ein Schmierstoff auf Wasserbasis ist beispielsweise aus der EP 2 473 587 B1 bekannt. Der Schmierstoff enthält unter anderem 5 bis 80 Gew.-% wasserlösliches Polyalkylenglykol und 0,5 bis 20 Gew.-% schäumende oder nichtschäumende Emulgatoren.

Eine weitere Schmiermittel-Zusammensetzung auf Wasserbasis ist zum Beispiel in der EP 0 946 693 B1 beschrieben. Diese Zusammensetzung umfasst 60 bis 90 Gew.-% Wasser, 5 bis 18 Gew.-% Bindemittel, welches Ton, Natriummontmorillonit oder Casein enthält, und 3 bis 32 Gew.-% Reibungsmodifikationsmittel.

Die DE 10 2008 051 264 A1 beschreibt ein Korrosionsschutzmittel, welches zum Aufbringen auf metallische Bauteile vorgesehen ist, ohne dass die Bauteile vor einem Verbauen vom Korrosionsschutzmittel befreit werden müssen. Auch soll das Korrosionsschutzmittel ein gutes Beschichten öliger Oberflächen erlauben. Das Korrosionsschutzmittel umfasst mehr als 50 % Wasser, ein Tensid, sowie ein Borsäurederivat und weitere Bestandteile.

Der Erfindung liegt die Aufgabe zugrunde, Maschinenelemente, welche zum Einsatz in wasserbasierten Schmierstoffen vorgesehen sind und mindestens eine Wälzkontaktfläche aufweisen, gegenüber dem genannten Stand der Technik weiterzuentwickeln, wobei ein besonders günstiges Verhältnis zwischen Produkteigenschaften und Herstellungsaufwand gegeben sein soll.

Diese Aufgabe wird erfindungsgemäß gelöst durch ein Maschinenelement mit den Merkmalen des Anspruchs 1. Ebenso wird die Aufgabe gelöst durch ein Verfahren zur Wärmebehandlung eines Maschinenelementes gemäß Anspruch 5. Im Folgenden im Zusammenhang mit dem Wärmebehandlungsverfahren erläuterte Ausgestaltungen und Vorteile der Erfindung gelten sinngemäß auf für die Vorrichtung, das heißt das Maschinenelement, und umgekehrt.

Das Maschinenelement weist mindestens eine Wälzkontaktfläche auf, die durch einen Stahlwerkstoff folgender Zusammensetzung gebildet ist:

**Tab. 1: Stahlwerkstoff, Zusammensetzung**

| C | Si | Mn | P | S | Cr | Mo | Ni | N | V |
|---|---|---|---|---|---|---|---|---|---|
| 0,30-0,60 | ≤ 0,5 | 1,5 - 2,5 | ≤ 0,04 | ≤ 0,03 | 12-14,5 | 0,35-0,7 | 0,3-0,7 | 0,1-0,2 | ≤ 0,2 |

Sämtliche Werte sind in der Tabelle in Gew.-% angegeben.

Die Erfindung geht von der Überlegung aus, dass die Verwendung von wasserbasierten Schmierstoffen ein erhöhtes Risiko wasserstoffbedingter Schäden mit sich bringen kann. Insbesondere werden sogenannte White Etching Crack Schäden (WEC) in Verbindung mit Wasserstoff genannt. Hierauf wird unter anderem in dem bereits genannten Dokument WO 2019/024958 A1 eingegangen. Ein bewährter Werkstoff, mit dem sich WEC-Schäden vermeiden lassen, ist Cronidur 30. Die Verwendung von Cronidur 30 kommt in Fällen Betracht, in denen ein hoher Herstellungsaufwand in Kauf genommen wird.

Mit dem anmeldungsgemäßen Maschinenelement wird ein Bauteil bereitgestellt, welches eine mechanisch hoch belastbare Wälzkontaktfläche, die mit einem wasserbasierten Schmierstoff zu schmieren ist, aufweist, wobei im Vergleich zu Cronidur 30 eine signifikant rationellere Herstellung möglich ist. Der Stahlwerkstoff, aus welchem zumindest die Wälzkontaktfläche des Maschinenelements gefertigt ist, stellt einen sogenannten MNS (Middle Nitrogen Steel) dar.

Die Wärmebehandlung des Maschinenelements nach Anspruch 1 umfasst eine Erhitzung des Maschinenelements auf eine Austenitisierungstemperatur von mindestens 900 °C und höchstens 1.100 °C wird. Nach einer anschließenden Abkühlung wird das Maschinenelement bei einer Temperatur von mindestens 120 °C und höchstens 200 °C angelassen.

Optional schließt das Abkühlen eine Tiefkühlung bei einer Temperatur von mindestens - 200 °C und höchstens - 40 °C ein. Hinsichtlich der Tiefkühlung von Werkstücken im Rahmen eines Wärmebehandlungsverfahrens wird beispielhaft auf das Dokument DE 10 2010 017 967 A1 hingewiesen.

Ein besonderer Vorteil des stickstofflegierten Stahls (MNS), welcher die Wälzkontaktfläche des Maschinenelements bildet, stellt die Möglichkeit des Umschmelzens des Stahls unter Atmosphärendruck dar. An ein Elektroschlacke-Umschmelzen schließt sich in möglicher Verfahrensführung Schmieden als thermomechanisches Verfahren an. Auf Weichglühen folgt die Martensitische Härtung mit den genannten Temperaturparametern.

Die Summe des Kohlenstoffgehalts und des Stickstoffgehalts des Stahlwerkstoffs beträgt mindestens 0,6 Gew.-% und höchstens 0,7 Gew.-%.

Das Verhältnis von Kohlenstoffgehalt zu Stickstoffgehalt des Stahlwerkstoffs liegt im Bereich von 2,7 bis 3,1.

Der PREN-Wert (Pitting Resistance Equivalent Number), welcher ein Maß für die Korrosionsfestigkeit darstellt und folgendermaßen definiert ist:

$$\text{PREN} = \text{Chromgehalt} + 3{,}3 \times \text{Molybdängehalt} + 16 \times \text{Stickstoffgehalt (jew. in Gew.-\%)}$$

liegt im Bereich von 15 bis 20, beispielsweise im Bereich von 16 bis 18.

Das Maschinenelement, bei welchem es sich um ein Wälzlagerelement oder um ein Zahnrad handelt, ist zur Verwendung in verschiedensten Bauformen von Getrieben, unter anderem für Fahrzeuge mit Elektroantrieb, geeignet. Ist die Wälzkontaktfläche des Maschinenelementes als Wälzkörperlaufbahn ausgebildet, so können beispielsweise Wälzkörper aus Metall oder keramische Wälzkörper auf der Wälzkontaktfläche abrollen. In allen Fällen eignet sich das Maschinenelement für eine Schmierung mit einem wasserbasierten Schmierstoff.

Nachfolgend wird ein Ausführungsbeispiel der Erfindung anhand einer Zeichnung näher erläutert. Hierin zeigen:

Fig. 1    ausschnittsweise ein Wälzlager in schematischer Darstellung,

Fig. 2    in einem Diagramm Materialparameter von Lagerringen des Wälzlagers nach Figur 1,

Fig. 3    den Temperaturverlauf bei einer Wärmebehandlung der Lagerringe.

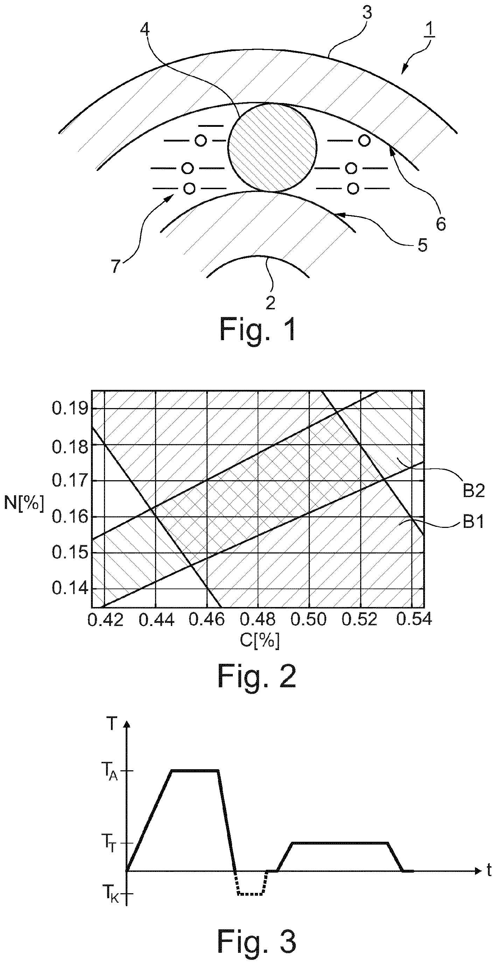

Ein in Figur 1 ausschnittsweise skizziertes Wälzlager 1 ist zur Verwendung in einem Getriebe eines Fahrzeugs mit Elektroantrieb vorgesehen. Das Wälzlager 1 umfasst einen Innenring 2 und einen Außenring 3 als Lagerringe, zwischen welchen Wälzkörper 4 abrollen. Die Wälzkörper 4 sind im Ausführungsbeispiel aus einem keramischen Werkstoff gefertigt und in einem nicht dargestellten Käfig geführt. Wälzkontaktflächen der Lagerringe 2, 3 sind mit 5, 6 bezeichnet. Das Wälzlager 1 ist mit einem wasserbasierten Schmiermittel 7 geschmiert.

Die Lagerringe 2, 3 sind aus einem Stahl folgender Zusammensetzung gefertigt:

| | |
|---|---|
| - Kohlenstoff: | 0,30 % bis 0,60 % |
| - Silizium: | $\leq$ 0,5 % |
| - Mangan: | 1,5 bis 2,5 % |
| - Phosphor: | $\leq$ 0,04 % |
| - Schwefel: | $\leq$ 0,03 % |

| | |
|---|---|
| - Chrom: | 12 bis 14,5 % |
| - Molybdän: | 0,35 bis 0,7 % |
| - Nickel: | 0,3 bis 0,7 % |
| - Stickstoff: | 0,1 bis 0,2 % |
| - Vanadium: | $\leq$ 0,2 % |

Im Übrigen kann der Stahl, aus welchem die Lagerringe 2, 3 gefertigt sind, neben Eisen erschmelzungsbedingte Verunreinigungen enthalten. Zugleich sind folgende Bedingungen B1 (erste Bedingung) und B2 (zweite Bedingung) erfüllt:

B1: $0,6 \leq$ Summe aus Kohlenstoffgehalt und Stickstoffgehalt $\leq 0,7$
B2: Kohlenstoffgehalt / Stickstoffgehalt $\leq 3,1$

(alle Angaben in Gew.-%)

Was die gleichzeitige Erfüllung dieser beiden Bedingungen betrifft, wird auf Figur 2 verwiesen. Die beiden Bedingungen B1 und B2 sind innerhalb des kreuzschraffierten Feldes erfüllt. Unter anderem sind folgende Punkte in diesem Feld angeordnet:

Kohlenstoffgehalt = 0,46 Gew.-%; Stickstoffgehalt = 0,16 Gew.-%
$\rightarrow$ Summe (C + N) = 0,62; Verhältnis C/N = 2,875

Kohlenstoffgehalt = 0,50 Gew.-%; Stickstoffgehalt = 0,18 Gew.-%
$\rightarrow$ Summe (C + N) = 0,68; Verhältnis C/N = 2,78

Der PREN-Wert (Chromgehalt + 3,3 x Molybdängehalt + 16 x Stickstoffgehalt, jeweils in Gew.-%) des Stahls, aus welchem die Lagerringe 2, 3 gefertigt sind, liegt bei mindestens 15 und höchstens 20.
Hinsichtlich der Wärmebehandlung der Maschinenelemente 2, 3, das heißt in diesem Fall Lagerringe, wird auf Figur 3 verwiesen. Danach erfolgt eine Austenitisierung des Stahlwerkstoffs der Lagerringe 2, 3 bei einer Temperatur $T_A$ von 900 °C bis 1100 °C. Bei einer anschließenden, optionalen Tiefkühlung werden die Maschinenelemente 2, 3 auf eine Temperatur $T_K$, das heißt Tiefkühltemperatur, im Bereich von -40 °C bis -200 °C gebracht. Anschließend wird der martensitisch gehärtete Stahlwerkstoff bei einer Temperatur $T_T$ (tempering) im Bereich von 120 °C bis 200 °C angelassen. An die Wärmebehandlung der Lagerringe 2, 3 kann sich eine mechanische Endbearbeitung, insbesondere Schleifen oder Honen, anschließen.

**Bezugszeichenliste**

| | |
|---|---|
| 1 | Wälzlager |
| 2 | Lagerring, Innenring |
| 3 | Lagerring, Außenring |
| 4 | Wälzkörper |
| 5 | Wälzkontaktfläche |
| 6 | Wälzkontaktfläche |
| 7 | Schmiermittel |

| | |
|---|---|
| B1 | erste Bedingung |

B2   zweite Bedingung
t      Zeit
T      Temperatur
$T_A$  Austenitisierungstemperatur
$T_K$  Tiefkühltemperatur
$T_T$  Anlasstemperatur

**Patentansprüche**

1.   Maschinenelement, mit einer Wälzkontaktfläche (5, 6), welche durch einen Stahlwerkstoff folgender Zusammensetzung (Angaben jeweils in Gew.-%) gebildet ist:

   - Kohlenstoff:    0,30 bis 0,60
   - Silizium:       ≤ 0,5
   - Mangan:         1,5 bis 2,5
   - Phosphor:       ≤ 0,04
   - Schwefel:       ≤ 0,03
   - Chrom:          12 bis 14,5
   - Molybdän:       0,35 bis 0,7
   - Nickel:         0,3 bis 0,7
   - Stickstoff:     0,1 bis 0,2
   - Vanadium:       ≤ 0,2
   - Rest:           Eisen und erschmelzungsbedingte Verunreinigungen, wobei

   - die Summe des Kohlenstoffgehalts und des Stickstoffgehalts des Stahlwerkstoffs mindestens 0,6 Gew.-% und höchstens 0,7 Gew.-% beträgt,
   - das Verhältnis von Kohlenstoffgehalt zu Stickstoffgehalt des Stahlwerkstoffs mindestens 2,7 und höchstens 3,1 beträgt,
   - der PREN-Wert des Stahlwerkstoffs mindestens 15 und höchstens 20 beträgt wobei die Definition PREN-Wert = Chromgehalt + 3,3 × Molybdängehalt + 16 × Stickstoffgehalt. jeweils in Gew.-%, gilt.

2.   Maschinenelement nach Anspruch 1, **dadurch gekennzeichnet, dass** dieses als Wälzlagerelement ausgebildet ist.

3.   Maschinenelement nach Anspruch 1, **dadurch gekennzeichnet, dass** dieses als Zahnrad ausgebildet ist.

4.   Verwendung eines Maschinenelementes nach Anspruch 1 in einer mit einem wasserbasierten Schmierstoff geschmierten Maschine.

5.   Verfahren zur Wärmebehandlung eines Maschinenelementes nach Anspruch 1, wobei das Maschinenelement auf eine Austenitisierungstemperatur ($T_A$) von mindestens 900 °C und höchstens 1.100 °C erhitzt wird, ausgehend von diesem Temperaturniveau gekühlt wird, und bei einer Temperatur ($T_T$) von mindestens 120 °C und höchstens 200 °C angelassen wird.

6.   Verfahren nach Anspruch 5, **dadurch gekennzeichnet, dass** das Abkühlen des Maschinenelementes eine Tiefkühlung bei einer Temperatur ($T_K$) von mindestens minus 200 °C und höchstens minus 40 °C einschließt.

**Claims**

1.   Machine element with a roller bearing contact surface (5, 6) which is formed by a steel material of the following composition (specifications respectively in wt.%):

   - carbon:      0.30 to 0.60
   - silicon:     ≤ 0.5
   - manganese:   1.5 to 2.5

(continued)

| - phosphorus: | ≤ 0.04 |
| - sulfur: | ≤ 0.03 |
| - chromium: | 12 to 14.5 |
| - molybdenum: | 0.35 to 0.7 |
| - nickel: | 0.3 to 0.7 |
| - nitrogen: | 0.1 to 0.2 |
| - vanadium: | ≤ 0.2 |
| - remainder: | iron and impurities resulting from the steel production, |

wherein

- the sum of the carbon content and the nitrogen content of the steel material is at least 0.6 wt.% and at most 0.7 wt.%,
- the ratio of carbon content to nitrogen content of the steel material is at least 2.7 and at most 3.1,
- the pitting resistance equivalent number value of the steel material is at least 15 and at most 20,

wherein the definition applied to the pitting resistance equivalent number value = chromium content +3.3 x the molybdenum content + 16 x the nitrogen content, each respectively in wt.%,

2. Machine element according to claim 1, **characterized in that** this is designed as a roller bearing element.

3. Machine element according to claim 1, **characterized in that** this is designed as a gear.

4. Use of a machine element according to claim 1 in a machine lubricated with a water-based lubricant.

5. Method for heat treatment of a machine element according to claim 1, wherein the machine element is heated to an austenitizing temperature ($T_A$) of at least 900 °C and at most 1,100 °C, is cooled starting from this temperature level, and is tempered at a temperature ($T_T$) of at least 120 °C and at most 200 °C.

6. Method according to claim 5, **characterized in that** the cooling of the machine element includes a deep freezing at a temperature ($T_K$) of at least minus 200 °C and at most minus 40 °C.

**Revendications**

1. Élément de machine, doté d'une surface de contact de roulement (5, 6), qui est créée en un matériau en acier de la composition suivante (les mentions sont données respectivement en % en poids) :

| - acier : | de 0,30 à 0,60 |
| - silicium : | ≤ 0,5 |
| - manganèse : | de 1,5 à 2,5 |
| - phosphore : | 0,04 |
| - soufre : | 0,03 |
| - chrome : | de 12 à 14,5 |
| - molybdène : | de 0,35 à 0,7 |
| - nickel : | de 0,3 à 0,7 |
| - azote : | de 0,1 à 0,2 |
| - vanadium : | ≤ 0,2 |
| - reste : | fer et impuretés dues à la fusion |

- la somme de la teneur en carbone et de la teneur en azote du matériau en acier s'élevant au minimum à 0,6 % en poids et au maximum à 0,7 % en poids,
- le rapport de la teneur en carbone à la teneur en azote du matériau en acier s'élevant au minimum à 2,7 et au maximum à 3,1,

- l'indice prEN du matériau en acier s'élevant au minimum à 15 et au maximum à 20, la définition de l'indice prEN étant = teneur en chrome + 3,3 x teneur en molybdène + 16 x teneur en azote, respectivement en % en poids.

2. Élément de machine selon la revendication 1, **caractérisé en ce que** celui-ci est réalisé sous la forme d'un élément de palier à roulement.

3. Élément de machine selon la revendication 1, **caractérisé en ce que** celui-ci est réalisé sous la forme d'une roue dentée.

4. Utilisation d'un élément de machine selon la revendication 1, dans une machine lubrifiée avec un lubrifiant à base d'eau.

5. Procédé de traitement thermique d'un élément de machine selon la revendication 1, l'élément de machine étant chauffé à une température d'austénitisation (TA) d'un minimum de 900 °C et d'un maximum de 1.100 °C, refroidi en partant de ce niveau de température, et trempé à une température ($T_T$) d'un minimum de 120 °C et d'un maximum de 200 °C.

6. Procédé selon la revendication 5, **caractérisé en ce que** le refroidissement de l'élément de machine inclut une congélation à une température ($T_K$) d'un minimum de moins 200 °C et d'un maximum de moins 40 °C.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20200080594 A1
- WO 2019024958 A1
- EP 0926368 B1
- DE 102014208138 A1
- WO 9841663 A1
- DE 19629398 A1
- DE 102013206141 A1
- EP 2473587 B1
- EP 0946693 B1
- DE 102008051264 A1
- DE 102010017967 A1